(19)

**Europäisches Patentamt**

**European Patent Office**

**Office européen des brevets**

(11) **EP 2 138 079 B1**

(12) **FASCICULE DE BREVET EUROPEEN**

(45) Date de publication et mention de la délivrance du brevet:
**02.07.2014 Bulletin 2014/27**

(51) Int Cl.:
***A47J 36/02*** *(2006.01)*

(21) Numéro de dépôt: **09305568.9**

(22) Date de dépôt: **18.06.2009**

(54) **Dispositif de cuisson d'aliments pourvu d'un fond en acier inoxydable ferritique et d'une cuve en acier inoxydable austenitique ou ferritique**

Vorrichtung zum Kochen von Lebensmitteln mit Boden aus ferritischem Edelstahl und einem Kessel aus austenitischem oder ferritischem Edelstahl

Device for cooking food equipped with a ferritic stainless-steel bottom and an austenitic or ferritic stainless-steel vat

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **23.06.2008 FR 0803509**

(43) Date de publication de la demande:
**30.12.2009 Bulletin 2009/53**

(73) Titulaire: **Seb S.A.**
**69130 Ecully (FR)**

(72) Inventeurs:
• **Bourdin, Alain, Gilles**
**21610 Saint-Seine sur Vingeanne (FR)**

• **Poty, Jean-François, Marie**
**21000 Dijon (FR)**
• **Roche, Carole, Audrey, Alice**
**21000 Dijon (FR)**

(74) Mandataire: **Martin, Didier Roland Valéry**
**Cabinet Didier Martin**
**50, chemin des Verrières**
**69260 Charbonnières-les Bains (FR)**

(56) Documents cités:
**EP-A- 1 053 711     WO-A-2005/021179**
**DE-A- 10 120 500     US-A- 5 532 461**

Printed by Jouve, 75001 PARIS (FR)

## Description

La présente invention se rapporte au domaine technique général des dispositifs de chauffage et/ou de cuisson d'aliments à usage domestique, de tels ustensiles étant destinés à assurer la cuisson et/ou le chauffage de substances alimentaires liquides ou solides.

La présente invention concerne plus particulièrement un dispositif de cuisson d'aliments comprenant :

- une cuve en acier inoxydable ferritique ou austénitique destinée à accueillir les aliments et pourvue d'une paroi inférieure présentant une face externe,

- une coupelle en acier inoxydable ferritique rapportée sur ladite face externe et attachée à ladite cuve, ladite coupelle formant un fond par l'intermédiaire duquel le dispositif de cuisson est destiné à reposer sur une plaque de cuisson,

- et des motifs gravés sur ledit fond.

On connaît des dispositifs de cuisson d'aliments comprenant une cuve destinée à accueillir les aliments en vue de les cuire ou de les réchauffer, ladite cuve étant destinée à être soumise à l'influence d'une source de chauffe externe, constituée typiquement par une plaque de cuisson.

Compte-tenu des contraintes, en particulier thermiques, mécaniques et chimiques (corrosion) auxquelles est soumise la cuve, il est connu de réaliser cette dernière en acier inoxydable. Il est en particulier connu d'utiliser, pour la fabrication des cuves, de l'acier inoxydable austénitique car ce matériau présente non seulement d'excellentes aptitudes à être mis en forme, en particulier par emboutissage, mais également un aspect esthétique attractif.

L'utilisation d'acier inoxydable austénitique est tout particulièrement indiquée pour la fabrication d'autocuiseurs, dont la cuve est obtenue notamment par une opération délicate d'emboutissage de grande amplitude, opération qui peut être facilitée par l'emploi d'acier inoxydable austénitique.

L'acier inoxydable austénitique ne permet toutefois pas à la cuve d'être utilisée en conjonction avec une plaque de chauffage par induction, car l'acier austénitique ne présente pas les caractéristiques ferromagnétiques requises pour permettre un tel chauffage par induction. C'est pourquoi il est connu de rapporter une coupelle en acier inoxydable ferritique sur la face externe de la paroi inférieure de la cuve, par frappe à chaud. L'acier inoxydable ferritique présente en effet des caractéristiques ferromagnétiques lui permettant de s'échauffer lorsqu'il est soumis au champ magnétique créé par une plaque de cuisson par induction. Une couche d'aluminium est en outre interposée entre la face externe de la paroi inférieure de cuve et la coupelle, pour améliorer le transfert thermique entre la coupelle et la cuve. La cuve ainsi obtenue bénéficie à la fois de l'excellent aspect esthétique et de la facilité de formage de l'acier inoxydable austénitique, ainsi que des propriétés ferromagnétiques de l'acier inoxydable ferritique autorisant son utilisation en conjonction avec une plaque de cuisson par induction.

Ces dispositifs de cuisson connus, s'ils donnent généralement satisfaction, posent toutefois un certain nombre de problèmes techniques, économiques et industriels.

En effet, l'acier inoxydable austénitique contient une quantité importante de nickel. Or, on constate une tension sur le marché du nickel qui conduit à des évolutions importantes du coût de cette matière première en fonction de la demande internationale. En particulier, le coût du nickel peut être amené à augmenter de façon suffisamment importante pour entraîner une hausse significative du prix de revient de la cuve d'un autocuiseur. Par conséquent, il est peu intéressant d'un point de vue économique de fabriquer des cuves en acier inoxydable austénitique lorsque le cours du nickel est élevé, ce qui est d'ailleurs de plus en plus régulièrement le cas.

En outre, l'acier inoxydable ferritique et l'acier inoxydable austénitique présentent des comportements thermomécaniques différents. Cela peut engendrer, lorsque le dispositif de cuisson est soumis à la chaleur de la source de chauffe, des déformations de l'ensemble formé par la cuve et la coupelle qui ne sont pas acceptables d'un point de vue fonctionnel. Afin de minimiser ces effets indésirables dus majoritairement à la dilatation de la coupelle, il est connu de pratiquer dans toute l'épaisseur de cette dernière des lumières. La présence de ces lumières entraîne toutefois la mise en communication de la couche intermédiaire d'aluminium positionnée entre la coupelle et la face externe de la paroi inférieure de cuve avec l'extérieur, ce qui est susceptible de conduire à une érosion progressive de l'aluminium rendu ainsi apparent, en particulier si l'autocuiseur est lavé régulièrement au lave-vaisselle (les lessives employées en lave-vaisselle sont en effet généralement extrêmement agressives vis-à-vis de l'aluminium).

Enfin, l'utilisation d'une cuve en acier austénitique et d'une coupelle en acier ferritique pose des problèmes en matière de fabrication. Ainsi, la fabrication d'un sous-ensemble cuve / coupelle est généralement réalisée en rapportant par frappe à chaud la coupelle en acier inoxydable ferritique sur la face externe de la paroi inférieure de la cuve en acier inoxydable austénitique.

Cette frappe à chaud génère une liaison intime (atomique) entre la cuve et la coupelle au niveau de la périphérie de cette dernière, une couche d'aluminium étant interposée entre la cuve et la coupelle. Or, on constate généralement à l'issue de cette opération de frappe à chaud que le fond du récipient ainsi obtenu est bombé vers l'extérieur, c'est-à-dire que la coupelle présente une forme convexe. Une telle forme convexe n'est bien entendu absolument pas acceptable puisqu'elle empêcherait le récipient de reposer de façon stable sur un support plan. Ce problème de bombement convexe de la coupelle résulte *a priori* d'une interaction mécanique entre l'acier austénitique de la cuve et l'acier ferritique de la coupelle, ce dernier exerçant localement une « *traction* » sur l'acier austénitique de la cuve, traction que l'acier austénitique de la cuve n'est pas en mesure de contrebalancer, ce qui conduit au bombement convexe en question. Ce phénomène est minimisé par la réalisation de lumière à travers la coupelle, mais il ne disparaît pas pour autant et nécessite d'être corrigé par une opération supplémentaire de reconformation.

Afin de s'affranchir de ce problème de fabrication, ainsi que du problème économique lié aux variations du coût du nickel, il pourrait être envisageable de réaliser la cuve en acier ferritique (qui est dépourvu de nickel), tout comme la coupelle. Si une telle mesure technique est de nature à résoudre le problème économique découlant des variations du prix du nickel, elle ne résout cependant pas de manière satisfaisante le problème de la fabrication. En effet, en raison des contraintes thermomécaniques auxquelles elle est destinée à être soumise, la cuve présente une épaisseur relativement importante, épaisseur qu'il n'est pas nécessaire d'adopter en ce qui concerne la coupelle. Cette différence d'épaisseur entre la coupelle et la cuve entraîne, à l'issu de l'opération de frappe à chaud permettant d'assembler la coupelle à la cuve, l'apparition d'un bombement concave de grande amplitude de la coupelle vers l'intérieur de la cuve.

Ce caractère concave est beaucoup trop marqué pour être acceptable, car il nuirait à la qualité du transfert énergétique entre la plaque de cuisson et le récipient. Ce phénomène de bombement concave provient vraisemblablement du fait que l'épaisseur d'acier ferritique la plus importante (correspondant à la cuve) exerce une «*traction*» sur l'épaisseur d'acier ferritique moindre (correspondant à la coupelle). La réalisation de lumière à travers la coupelle n'est dans ce cas d'aucun secours, et contribue au contraire à accentuer ce phénomène de bombement concave. Une option possible pour résoudre ce problème pourrait être de mettre en oeuvre une coupelle en acier ferritique présentant une épaisseur supérieure, et par exemple sensiblement équivalente voire supérieure à celle de l'épaisseur de la cuve. Une telle mesure irait toutefois à l'encontre du but d'économie recherché.

On connaît du document EP-1 053 711 un dispositif conforme au préambule de la revendication 1.

Les objets assignés à l'invention visent en conséquence à remédier aux différents inconvénients énumérés précédemment, et à proposer un nouveau dispositif de cuisson d'aliments particulièrement robuste et dont la fabrication est économique quel que soit le cours du nickel, et est optimisée industriellement, c'est-à-dire qu'elle tire partie des matériaux présentant à l'instant considéré le meilleur rapport qualité/prix tout en ne nécessitant qu'un minimum d'outillage et d'opérations différents.

Un autre objet de l'invention vise à proposer un nouveau dispositif de cuisson d'aliments qui soit particulièrement économique lorsque le cours du nickel est élevé.

Un autre objet de l'invention vise à proposer un nouveau dispositif de cuisson d'aliments dont la fabrication est facilitée et qui présente un prix de revient acceptable lorsque le cours du nickel est bas.

Un autre objet de l'invention vise à proposer un nouveau dispositif de cuisson d'aliments dont la fabrication est basée sur des opérations classiques et bien maîtrisées.

Un autre objet de l'invention vise à proposer un nouveau dispositif de cuisson d'aliments dont la conception permet une excellente transmission de chaleur aux aliments qu'il est destiné à contenir.

Un autre objet de l'invention vise à proposer un nouveau dispositif de cuisson d'aliments qui présente en toutes circonstances une excellente stabilité dimensionnelle.

Un autre objet de l'invention vise à proposer un nouveau dispositif de cuisson d'aliments de conception particulièrement simple et qui ne nécessite pas, pour sa fabrication, d'opérations longues, compliquées et onéreuses.

Un autre objet de l'invention vise à proposer un nouveau dispositif de cuisson d'aliments à l'esthétique particulièrement attractive.

Les objets assignés à l'invention sont atteints à l'aide d'un dispositif de cuisson d'aliments conforme à l'objet de la revendication 1.

D'autres particularités et avantages de l'invention apparaîtront plus en détails à la lecture de la description qui suit, en référence aux dessins annexés donnés à titre d'exemple illustratifs et non limitatifs, dans lesquels :

- Les figures 1 à 3 illustrent, de façon chronologique et selon des vues schématiques en coupe verticale, des étapes du procédé de fabrication d'un dispositif de cuisson conforme à l'invention, la figure 3 illustrant un dispositif de cuisson d'aliments conforme à l'invention.

- La figure 4 illustre, selon une vue de dessous, une première variante de réalisation d'un dispositif de cuisson d'aliments conforme à l'invention.

- La figure 5 illustre, selon une vue de dessous, une deuxième variante de réalisation d'un dispositif de cuisson d'aliments conforme à l'invention.

- La figure 6 illustre, selon une vue de dessous, une troisième variante d'un dispositif de cuisson conforme à l'invention.

- La figure 7 illustre, selon une vue en coupe transversal, un détail de réalisation d'un dispositif de cuisson conforme à l'invention, permettant de visualiser la géométrie du trait de gravure des motifs.

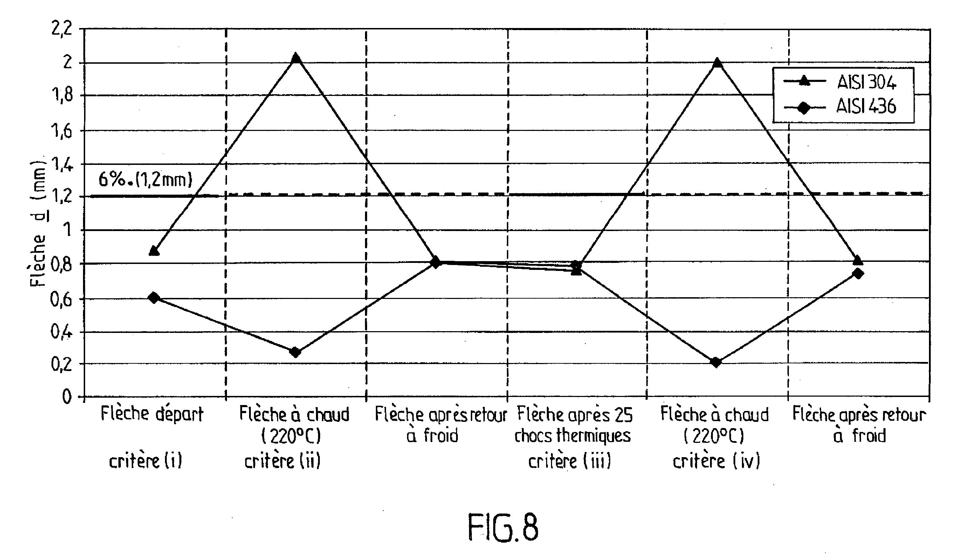

- La figure 8 est un graphe représentant l'évolution de la flèche $\underline{d}$ du fond d'un dispositif conforme à la figure 5, en fonction de différentes sollicitations, dont certaines (critères (i) à (iv)) correspondent à des exigences de la norme EN12778 de novembre 2002.

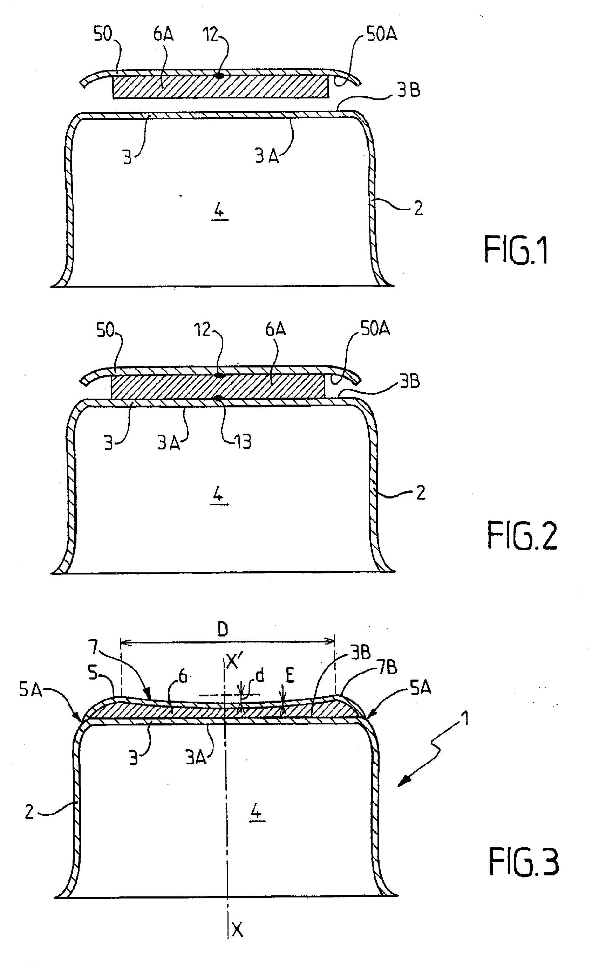

Les figures 1 à 3 illustrent schématiquement différents stades de la fabrication du récipient d'un dispositif de cuisson 1 conforme à l'invention, la figure 3 représentant ledit récipient une fois la fabrication achevée (ledit récipient étant représenté renversé sur la figure 3).

Tel que cela est visible sur la figure 3, le dispositif de cuisson d'aliments 1 comprend une cuve 2 destinée à accueillir les aliments et pourvue à cet effet d'une paroi inférieure 3, de préférence de forme sensiblement discoïde ou ovale, présentant une face interne 3A située en regard de l'intérieur 4 de la cuve et une face externe 3B opposée. La cuve 2 comprend également une paroi latérale annulaire qui s'élève à partir de la paroi inférieure, à la périphérie de cette dernière. Tel que cela est bien connu en tant que tel, la cuve 2 présente avantageusement une symétrie de révolution autour d'un axe X-X'. La cuve 2 est en acier inoxydable, pour pouvoir résister aux différentes contraintes thermomécaniques et chimiques (corrosion) auxquelles elle est destinée à être soumise, et plus précisément est en acier inoxydable ferritique ou austénitique.

Le dispositif de cuisson 1 conforme à l'invention est un dispositif thermiquement passif, c'est-à-dire qu'il est dépourvu de source de chauffe interne et doit être soumis à l'action d'une source de chauffe externe pour assurer le chauffage et la cuisson des aliments.

De préférence, le dispositif de cuisson d'aliments 1 constitue un autocuiseur, c'est-à-dire un dispositif de cuisson d'aliments sous pression. Dans ce cas, la cuve 2 est destinée à être fermée par un couvercle (non représenté) solidarisé à la cuve 2 par un système de verrouillage/déverrouillage activable par l'utilisateur. Le couvercle est également avantageusement pourvu, comme cela est bien connu en soi, d'une soupape de régulation de pression permettant de maintenir la pression à l'intérieur 4 de la cuve 2 à une valeur prédéterminée, et par exemple supérieure d'au moins 20 kPa à la pression atmosphérique. La cuve 2, lorsqu'elle constitue une cuve d'autocuiseur, est obtenue de préférence par une opération d'emboutissage d'un flan métallique, qui permet d'obtenir une cuve relativement profonde, avec des parois dont l'épaisseur est suffisante pour résister à des pressions élevées. Bien entendu, le choix de réaliser la cuve 2 en acier inoxydable est tout à fait indiqué pour un autocuiseur, car l'acier inoxydable présente notamment une excellente résistance à la corrosion mais également une excellente résistance mécanique, ce qui permet à la cuve 2 de supporter des pressions internes élevées.

L'invention n'est cependant pas limitée à un dispositif de cuisson 1 constitué par un autocuiseur et peut, à titre alternatif, être constituée par un des ustensiles du groupe suivant : casserole, poêle, marmite ou encore bouilloire, cette liste n'étant bien entendu pas limitative.

Conformément à l'invention, le dispositif de cuisson d'aliments 1 comprend une coupelle 5 rapportée sur la face externe 3B de la paroi inférieure 3 et attachée à ladite cuve 2. La coupelle 5 présente de préférence une forme de révolution autour d'un axe de symétrie X-X' qui est le même que celui de la cuve 2. La coupelle 5 comprend avantageusement une pièce centrale sensiblement discoïde à la périphérie de laquelle s'élève une paroi latérale annulaire qui s'étend entre un bord inférieur attaché à la pièce discoïde et un bord supérieur libre annulaire 5A qui vient se plaquer contre la cuve 2.

Conformément à l'invention, la coupelle 5 est en acier inoxydable ferritique, de manière à rendre compatible le dispositif de cuisson d'aliments 1 avec un chauffage par induction.

Avantageusement, le dispositif de cuisson 1 comprend en outre une couche intermédiaire 6 dont la conductibilité thermique est supérieure à celle de l'acier, et en particulier à celle de l'acier ferritique constituant la coupelle 5, ladite couche intermédiaire 6 étant interposée entre la face externe 3B de la paroi inférieure 3 et la coupelle 5. De préférence et comme cela est bien connu en soi, la couche intermédiaire 6 est en aluminium, lequel est connu pour présenter d'excellentes propriétés de conductibilité thermique. Comme illustré à la figure 3, la coupelle 5 englobe de préférence sensiblement complètement la couche intermédiaire 6, son bord libre venant épouser (et éventuellement interpénétrer), au niveau de la ligne périphérique correspondant au bord libre 5A de la coupelle 5, la périphérie de la face externe 3B de la paroi inférieure 3.

De cette façon la couche intermédiaire 6 est sensiblement isolée de l'extérieur, puisqu'elle est interposée entre la coupelle 5 et la paroi inférieure 3, dans une chambre fermée, voire étanche (circonscrite par la coupelle 5 et la face externe 3B) dont elle occupe de préférence sensiblement tout le volume.

Avantageusement, la coupelle 5 est attachée à la cuve 2 par une opération de frappe, et de préférence par une opération de frappe à chaud. La frappe à chaud est une technique bien connue de l'homme du métier. Elle consiste à effectuer à l'aide d'une presse une compression rapide, assimilable à un impact, et ce à chaud, afin de rendre la matière métallique plus malléable. Avantageusement, la couche intermédiaire 6 est également solidarisée à la face externe 3B de la paroi inférieure 3 par frappe à chaud. De préférence, le procédé de fabrication met en oeuvre une opération unique de frappe à chaud permettant simultanément de rapporter et de solidariser sur la face externe 3B de la paroi inférieure 3 à la fois la couche intermédiaire 6 et la coupelle 5.

La fabrication se déroule préférentiellement de la façon suivante :

-   un flan d'aluminium 6A est disposé contre la face interne 50 A d'un flan en acier inoxydable ferritique 50 destiné à former la coupelle 5, ledit flan d'aluminium 6A étant attaché à ladite face interne 50A par un point de soudure 12, comme illustré par la figure 1;

-   le sous-ensemble formé par l'association des flans d'aluminium 6A et d'acier inoxydable ferritique 50 est rapporté sur et attaché à la face externe 3B de la paroi inférieure 3 par un point de soudure 13, de telle sorte que le flan en aluminium 6A est interposé entre la face externe 3B et le flan en acier inoxydable ferritique 50, comme illustré à la figure 2 ;

-   cet empilement est ensuite soumis à une opération de frappe à chaud qui entraîne une liaison intime et uniforme de la face externe 3B, de la couche intermédiaire 6 et de la coupelle 5 sur toutes leurs surfaces respectives, la coupelle 5 étant liée à la cuve 2 par l'intermédiaire de la couche intermédiaire 6. Il est cependant tout à fait envisageable, à titre complémentaire et/ou alternatif, de lier la coupelle 5 directement à la cuve 2, par exemple en menant l'opération de frappe à chaud de façon que la coupelle 5 soit directement et intimement liée à la cuve 2 au niveau de son bord supérieur libre 5A.

On obtient ainsi un récipient constitué par l'assemblage de la cuve 2, de la coupelle 5, et de la couche intermédiaire 6.

La coupelle 5 forme un fond 7 par l'intermédiaire duquel le dispositif de cuisson 1 est destiné à reposer, de façon stable, sur une plaque de cuisson, ou sur tout autre support sensiblement plat (table, étagère ou autre). La coupelle 5 forme ainsi une embase pour la cuve 2 à laquelle elle est attachée, ladite embase ayant pour double fonction de servir d'interface d'appui pour la cuve 2 d'une part et de transmettre de l'énergie thermique au contenu de la cuve 2 d'autre part.

Le fond 7 présente, comme cela est bien connu en soi, une courbure suffisamment faible, pour à la fois former une surface de support stable pour le dispositif 1 et assurer un transfert énergétique suffisant entre la plaque de cuisson et le dispositif 1. Bien entendu, la courbure en question du fond 7 formé par la coupelle 5 ne peut être qu'une courbure concave, dirigée vers l'intérieur 4 de la cuve 2, dans la mesure où une courbure convexe empêcherait forcément le récipient formé par l'assemblage de la cuve 2 et de la coupelle 5 de reposer de façon stable sur un support plan.

Le degré de concavité du fond 7 est classiquement choisi de la façon suivante :

-   Il doit être suffisamment faible pour que la distance maximale d entre la plaque de cuisson et le fond 7, généralement désignée par l'appellation « *flèche du fond au centre* » ne nuise pas de façon rédhibitoire au rendement énergétique du dispositif de cuisson 1, c'est-à-dire ne gène pas de manière excessive le transfert énergétique entre la plaque de cuisson et la coupelle 5.

-   Cette courbure concave doit être cependant suffisamment marquée pour compenser une éventuelle déformation en sens convexe susceptible d'être provoquée par le chauffage du dispositif ; en d'autres termes, la présence d'une légère courbure concave a pour objet d'éviter, quelles que soient les contraintes thermomécaniques auxquelles est soumis le récipient formé par la cuve 2 et la coupelle 5, que la coupelle 5 ne devienne convexe et entraîne ainsi une instabilité d'appui du dispositif 1 sur la plaque de cuisson.
    La norme européenne EN12778 de novembre 2002 impose des plages de valeurs limites dans lesquelles la flèche d doit se situer en fonction des conditions thermomécaniques auxquelles est soumis le récipient formé par l'assemblage cuve 2 coupelle 5.

Cette norme impose en particulier les conditions suivantes :

(i) La flèche d doit être comprise, pour un dispositif 1 sorti d'usine hors conditions d'utilisation (c'est-à-dire à température ambiante), entre 0 (ce qui correspond à un fond 7 plant; une valeur de flèche d négative correspondrait à un fond 7 convexe, ce qui serait inacceptable) et 0,006 x D, où D est le diamètre de la couronne d'appui 7B du fond 7, c'est-à-dire le diamètre de l'interface de contact entre un support plan horizontal et le fond 7 reposant sur ledit support.

(ii) La flèche d doit être supérieure à 0 (c'est-à-dire que le fond 7 ne doit pas être convexe) pour un dispositif 1 dont le fond 7 est soumis à une température de 220°C.

(iii) La flèche d doit être comprise, pour un dispositif 1 hors conditions d'utilisation (c'est-à-dire à température ambiante) qui a subi 25 chocs thermiques, entre 0 et 0,006 x D.

(iv) La flèche d doit être supérieure à 0 (c'est-à-dire que le fond 7 ne doit pas être convexe) pour un dispositif 1 qui a subi 25 chocs thermiques et dont le fond 7 est soumis à une température de 220°C.

Le dispositif 1 conforme à l'invention satisfait aux exigences de cette norme européenne EN12778 de novembre 2002.

Conformément à l'invention, le dispositif 1 comprend également des motifs 8 gravés sur le fond 7 formé par la coupelle 5. Par «*gravés*» on doit comprendre ici que les motifs 8 en question sont tracés en creux sur le fond métallique 7. Les motifs 8 ne sont donc pas obtenus par enlèvement de matière dans le fond 7, mais par déformation en creux de ladite matière. Cela signifie en particulier que les motifs 8 ne sont pas formés par des lumières traversant toute l'épaisseur dudit fond 7. Les motifs 8 forment donc une empreinte non débouchante à la surface dudit fond 7. En d'autres termes, les motifs 8 ne traversent pas toute l'épaisseur du fond 7, et donc de la coupelle 5. Les motifs 8 ne traversent donc pas de part en part le fond 7. Le fait que les motifs 8 soient gravés et non découpés dans le fond 7 permet notamment de maintenir la couche intermédiaire d'aluminium 6 complètement isolée de l'environnement extérieur, ce qui permet de la préserver d'éventuelles agressions corrosives, générées par exemple par des lavages au lave-vaisselle.

Conformément à l'invention, la profondeur P de gravure desdits motifs 8 (c'est-à-dire la profondeur des creux formant lesdits motifs 8 à la surface de la coupelle 5) et la densité desdits motifs 8 sur le fond 7 (c'est-à-dire le rapport entre l'aire gravée et l'aire totale du fond 7) sont choisis pour que le fond 7 satisfasse aux exigences de la norme EN-12778 de novembre 2002 (notamment les exigences (i) à (iv) précitées), et ce que l'acier inoxydable de la cuve 2 soit indifféremment de nature ferritique ou austénitique.

Ainsi, l'invention repose en particulier sur l'identification de paramètres principaux permettant à la coupelle 5 d'être indifféremment associée, de préférence par frappe à chaud, à une cuve 2 en acier inoxydable austénitique ou ferritique pour obtenir un récipient qui répond aux exigences habituelles de fabrication et d'utilisation, et qui satisfasse donc aux exigences de la norme EN 12778 de novembre 2002.

Ces paramètres principaux sont donc les suivants :

- profondeur P de gravure desdits motifs 8,

- et densité desdits motifs 8 gravés sur le fond 7.

L'invention a ainsi permis d'établir que par simple réglage de la profondeur P et de la densité des motifs gravés sur la coupelle 5, il est possible d'associer une unique coupelle 5 ainsi gravée soit à une cuve 2 en acier inoxydable austénitique (de préférence de nuance AISI 304) soit à une cuve 2 en acier inoxydable ferritique (de préférence de nuance AISI 436 ou AISI 444) en obtenant dans chaque cas un excellent résultat, c'est-à-dire un récipient (formé par l'assemblage de la cuve 2 et de la coupelle 5) qui répond à tous les critères utilisés pour mesurer les performances des fonds d'ustensiles de cuisson, et au moins aux critères normatifs.

Ces critères, dont certains correspondent à des exigences de la norme EN12778 de novembre 2002, sont notamment les suivants, classés par ordre d'importance décroissantes :

- stabilité de la flèche du fond au centre (matérialisée par la distance d sur la figure 3) après 25 chocs thermiques,

- stabilité de la flèche d du fond au centre après mise sous pression d'épreuve,

- stabilité de la flèche du fond au centre après durabilité cuisson,

- stabilité du diamètre d'appui D et de la flèche du fond d après chauffe à sec,

- temps de montée en température sur une plaque à induction,

- puissance absorbée sur une plaque à induction,

- rendement sur plaque vitrocéramique (halogène ou radiante),

- rendement sur plaque en fonte (électrique),

- résistance au nettoyage en lave-vaisselle.

L'invention a ainsi permis de déterminer que le simple réglage de la profondeur de gravure et de la densité de motifs gravés sur le fond 7 permet d'obtenir une coupelle 5 utilisable à la fois avec une cuve en acier inoxydable ferritique et une cuve en acier inoxydable austénitique. En d'autres termes, l'invention a ainsi permis d'identifier les paramètres qui permettaient d'obtenir un compromis technique susceptible de laisser un certain choix à l'utilisateur pour le matériau de réalisation de la cuve 2.

Ainsi, lorsque le cours du nickel est bas, et donc que le prix de l'acier inoxydable austénitique est économiquement acceptable, le dispositif 1 sera avantageusement réalisé par association d'une coupelle 5 en acier inoxydable ferritique gravée conformément à l'enseignement de l'invention et d'une cuve 2 en acier inoxydable austénitique.

Dans l'hypothèse où le cours du nickel augmenterait, rendant ainsi le recours à l'acier inoxydable austénitique inopportun, la production pourrait être immédiatement poursuivie avec une cuve 2 en acier inoxydable ferritique (ou du moins en un acier inoxydable présentant une teneur en nickel moins élevée que l'acier austénitique) associée à la même coupelle 5, dans la mesure où la profondeur de gravure des motifs 8 et la densité de ces motifs 8 sur le fond 7 formé par la coupelle 5 auront été au préalable choisis pour que la coupelle 5 en question convienne à la fois à une cuve en acier inoxydable austénitique et à une cuve réalisée en un acier inoxydable présentant une teneur en nickel moindre, voire nulle comme c'est le cas pour l'acier inoxydable ferritique. Ainsi, le dispositif de cuisson d'aliments pourra comprendre avantageusement soit une cuve 2 réalisée en un acier de nature ferritique, soit une cuve 2 réalisée en un acier de nature austénitique.

De préférence, la densité des motifs 8 gravés sur le fond 7 est comprise entre sensiblement 10 et 60 %, et de façon encore plus préférentielle entre 10 % et 30 %. La demanderesse a en particulier mis en évidence qu'une densité d'environ 20% permettait d'obtenir d'excellents résultats, étant entendu que les plages 10%-20% d'une part et 20%-60% d'autre part donnaient également des résultats satisfaisants.

La densité des motifs est obtenue, au sens de l'invention, par la formule suivante :

$$\text{Densité}_{\text{motifs}} = S_{\text{gravée}} / S_{\text{non gravée}}$$

où $\text{Densité}_{\text{motifs}}$ représente la densité (en %) de motifs 8 telle qu'on l'entend au sens de l'invention, $S_{\text{gravée}}$ représente la surface (exprimée par exemple en mm$^2$) du fond 7 effectivement occupée par les motifs gravés et $S_{\text{non gravée}}$ représente la surface utile totale (exprimée dans la même unité que $S_{\text{gravée}}$) du fond 7, c'est-à-dire l'aire de la zone circonscrite par la couronne d'appui 7B (dans les exemples illustrés aux figures, $S_{\text{non gravée}}$ correspond ainsi sensiblement à la surface de la zone discoïde de diamètre D).

Avantageusement, la profondeur P de gravure desdits motifs 8 est quant à elle comprise, en fonction notamment de l'épaisseur de la couche intermédiaire 6, entre sensiblement 1,5% x E, et 90% x E, de façon encore plus préférentielle entre 15% x E et 50% x E, où E est la valeur de l'épaisseur de la coupelle 5. La demanderesse a en particulier mis en évidence qu'une profondeur de gravure sensiblement supérieure à 90% x E ne permettait généralement pas d'obtenir de résultats satisfaisants, car elle était susceptible de conduire à une fragilisation trop importante du métal constituant le fond 7. Au contraire, une profondeur de gravure sensiblement égale à E/3 (33,3% x E) donne d'excellents résultats.

Avantageusement, l'épaisseur E de la coupelle est sensiblement supérieure ou égale à 0,6 mm, cette valeur étant la valeur minimale permettant de garantir une compatibilité induction. En d'autres termes, si la valeur de l'épaisseur E est en deçà de 0,6 mm, il existe alors un risque de ne pas avoir un effet inductif suffisant pour permettre la cuisson dans des conditions acceptables par l'utilisateur.

Par souci d'économie de matière première, l'épaisseur E est de préférence sensiblement égale à 0,6 mm. Dans ce cas, la demanderesse a mis en évidence qu'une profondeur P entre sensiblement 0,01 mm et 0,54 mm, et de façon encore plus préférentielle entre 0,1 et 0,3 mm permettait d'obtenir de bons résultats. La demanderesse a en particulier mis en évidence qu'une profondeur de gravure sensiblement supérieure à 0,54 mm ne permettait généralement pas d'obtenir de résultats satisfaisants, car elle était susceptible de conduire à une fragilisation trop importante du métal constituant le fond 7. Au contraire, une profondeur de gravure sensiblement égale à 0,2 mm donne d'excellents résultats, étant entendu qu'une profondeur P comprise entre sensiblement 0,3 mm et 0,5 mm, ou même plus précisément entre sensiblement 0,3 et 0,4 mm ou entre sensiblement 0,4 et 0,5 mm permettait d'obtenir également des résultats satisfaisants, en fonction notamment de l'épaisseur de la couche intermédiaire 6.

Avantageusement, les motifs 8 sont répartis de façon sensiblement régulière sur le fond 7, et de façon encore plus préférentielle lesdits motifs 8 s'étendent sensiblement régulièrement sur la majeure partie de la surface du fond 7, voire la totalité de la surface en question, de préférence à l'exception :

- d'une zone centrale 7A, de préférence sensiblement circulaire, réservée au marquage du produit (nom de la marque et autres informations de nature commerciale, technique ou autre).

- et d'une couronne périphérique 7B, de préférence sensiblement circulaire de diamètre $D$, qui constitue la surface d'appui proprement dite du fond 7, c'est-à-dire que le fond 7, lorsqu'il est posé sur un support plan, repose sur ledit support par l'intermédiaire d'une surface en forme de couronne plane circulaire formée par la couronne périphérique 7B. L'absence de motifs sur la couronne d'appui 7B permet d'éviter d'affecter la structure du matériau, ce qui pourrait entraîner des variations dimensionnelles inacceptables à cet endroit, qui correspond à la zone d'appui du dispositif et qui doit donc être parfaitement et durablement plate, en toutes circonstances.

Avantageusement, les motifs 8 sont majoritairement constitués de lignes gravées. Cela signifie que lesdits motifs 8 sont réalisés à l'aide de traits en creux, et non de surfaces en creux, bien que cette dernière possibilité ne soit pas exclue.

Il a par ailleurs été établi que certains paramètres secondaires pouvaient intervenir pour l'obtention d'un résultat satisfaisant, en plus des paramètres principaux évoqués dans ce qui précède (densité et profondeur de gravure). Ces paramètres secondaires comprennent notamment :

- l'épaisseur de la couche intermédiaire 6, qui peut jouer un rôle dans l'obtention du résultat final ;

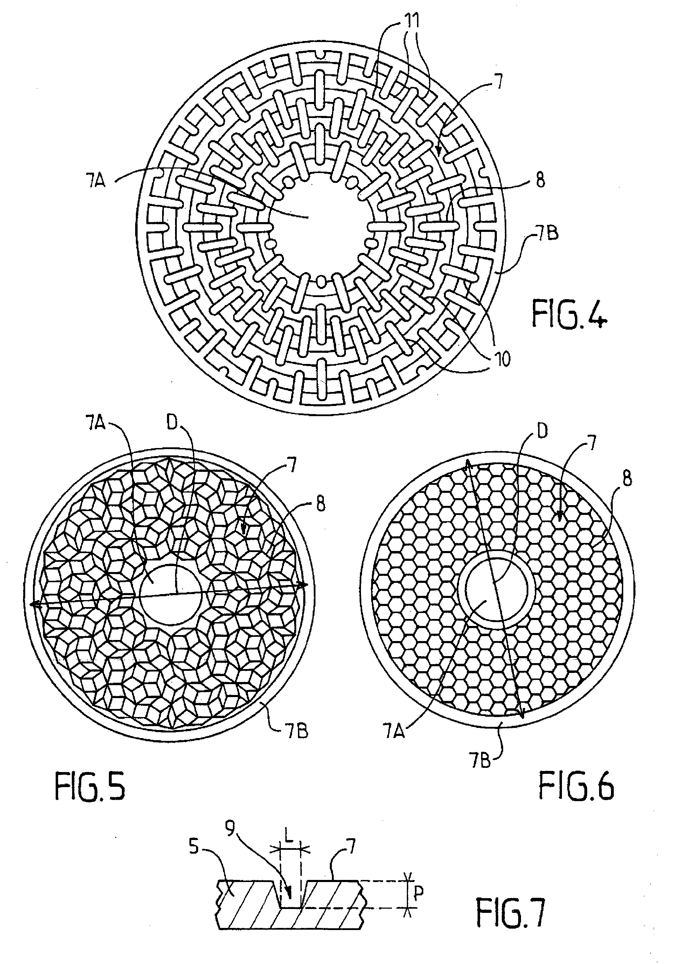

- et la géométrie du trait de gravure 9 qui forme les motifs 8 ; de préférence, la forme du trait de gravure 9 ne doit pas présenter, en coupe transversale, un profil formant un angle aigu (profil en V) mais plutôt, comme illustré à la figure 7, un profil à fond plat (profil en V tronqué ou profil trapézoïdal) ; de préférence, la largeur $L$ du trait de gravure 9 est comprise, au niveau du fond du trait, entre sensiblement 0,1 et 3 mm, et de préférence entre 0,8 et 1,2 mm. Une largeur $L$ en fond de trait de gravure environ égale à 1 mm donne d'excellents résultats, en particulier en conjonction avec une densité d'environ 20 % et une profondeur $P$ de gravure d'environ 0,2 mm.

Bien entendu, il existe une infinité de formes de motifs 8 permettant d'obtenir les résultats escomptés.

De préférence, les motifs 8 présentent un caractère répétitif, de façon à former un pavage, comme illustré aux figures 4 à 6.

Par exemple, comme illustré à la figure 5, ledit pavage peut être un pavage du genre pavage Penrose. Le caractère apériodique d'un tel pavage permet en outre de bénéficier de propriétés mécaniques intéressantes, en particulier du point de vue de la distribution de la rigidité sur la face d'appui 7.

Alternativement, le pavage peut être un pavage en nid d'abeille, comme illustré sur la figure 6, c'est-à-dire formé d'une pluralité de cellules hexagonales adjacentes.

Selon un autre mode de réalisation, qui est particulièrement préféré, lesdits motifs 8 comprennent une pluralité de formes annulaires oblongues 10 orientées radialement par rapport au centre de la coupelle 5 (centre par lequel passe l'axe X-X'). Lesdits motifs 8 comprennent en outre, dans ce mode de réalisation illustré à la figure 4, une pluralité de cercles concentriques 11 dont le centre correspond à celui de la coupelle 5, c'est-à-dire au centre du fond 7 formé par la coupelle 5.

De préférence, les motifs 8 sont disposés sur le fond 7 pour former un motif global résultant présentant une symétrie selon l'axe X-X', ce qui permet d'obtenir un comportement mécanique de la coupelle 5 homogène et uniforme.

Le tableau 1 qui suit récapitule, pour chacun des exemples correspondant respectivement aux figures 5 et 6, les valeurs conférées à certains des paramètres discutés dans ce qui précède et les résultats obtenus.

Il convient de relever que si les figures 4 à 6 ne sont pas à l'échelle 1, elles respectent toutefois les proportions et correspondent, à un facteur homothétique près, à la géométrie réelle qui a fait l'objet des essais objets du tableau 1.

Tableau 1

| | Forme des motifs | Diamètre d'appui $D$ | Profondeur $P$ de gravure | Densité de motifs | Largeur $L$ du trait de gravure | Compatibilité avec une cuve en acier austénitique (AISI 304) | Compatibilité avec une cuve en acier ferritique (AISI 436) |
|---|---|---|---|---|---|---|---|
| I | Figure 5 | 180 mm | 0,2 mm | 20,5 % | 1 mm | oui | oui |
| II | Figure 5 | 180 mm | 0,5 mm | 20,5 % | 1 mm | oui | non (profondeur trop |

(suite)

|  | Forme des motifs | Diamètre d'appui D | Profondeur P de gravure | Densité de motifs | Largeur L du trait de gravure | Compatibilité avec une cuve en acier austénitique (AISI 304) | Compatibilité avec une cuve en acier ferritique (AISI 436) |
|---|---|---|---|---|---|---|---|
|  |  |  |  |  |  |  | importante) |
| III | Figure 5 | 200 mm | 0,5 mm | 21,3 % | 1 mm | oui | non (profondeur trop importante) |
| IV | Figure 5 | 200 mm | 0,2 mm | 21,3 % | 1 mm | oui | oui |
| V | Figure 6 | 180 mm | 0,55 mm | 22,3 % | 1 mm | oui | non (profondeur trop importante) |

La figure 7 illustre graphiquement les résultats d'essais pratiqués sur un autocuiseur à étrier conforme à l'exemple IV du tableau 1 ci-dessus, certains de ces essais vissant à établir la conformité à certains des critères (i) à (iv) précités de la norme EN 127 78 de novembre 2002.

De préférence, les motifs 8 sont gravés simultanément par une opération de frappe, et de préférence une opération de frappe à chaud. De façon particulièrement avantageuse, cette opération de frappe à chaud est la même que celle qui permet d'assembler la coupelle 5, la couche intermédiaire 6 et la cuve 2.

Il suffit en effet de prévoir, à la surface de la matrice de l'outil de presse assurant la frappe, un dessin en relief correspondant aux motifs 8.

## Revendications

**1.** Dispositif (1) de cuisson d'aliments comprenant :

- une cuve (2) en acier inoxydable ferritique ou austénitique destinée à accueillir les aliments et pourvue d'une paroi inférieure (3) présentant une face externe (3B),
- une coupelle (5) en acier inoxydable ferritique rapportée sur ladite face externe (3B) et attachée à ladite cuve (2), ladite coupelle (5) formant un fond (7) par l'intermédiaire duquel le dispositif de cuisson (1) est destinée à reposer sur une plaque de cuisson,
- des motifs (8) gravés sur ledit fond (7),

ledit dispositif (1) étant **caractérisé en ce que** la profondeur (P) de gravure desdits motifs (8) et la densité de ces derniers sur le fond (7) sont choisis pour que ledit fond (7) satisfasse aux exigences de la norme EN-12778 de novembre 2002, et ce que l'acier inoxydable de la cuve (2) soit indifféremment de nature ferritique ou austénitique, permettant d'obtenir une unique coupelle (5) utilisable à la fois avec une cuve (2) en acier inoxydable ferritique et une cuve (2) en acier inoxydable austénitique.

**2.** Dispositif (1) selon la revendication 1 **caractérisé en ce que** la coupelle (5) est attachée à la cuve (2) par une opération de frappe.

**3.** Dispositif (1) selon l'une des revendications 1 et 2 **caractérisé en ce qu'**il comprend une couche intermédiaire (6) dont la conductibilité thermique est supérieure à celle de l'acier, ladite couche intermédiaire (6) étant interposée entre la face externe (3A) de la paroi inférieure (3) et la coupelle (5).

**4.** Dispositif (1) selon l'une des revendications 1 à 3 **caractérisé en ce que** lesdits motifs (8) présentent un caractère répétitif, de façon à former un pavage.

**5.** Dispositif (1) selon la revendication 4 **caractérisé en ce que** ledit pavage est un pavage du genre pavage de Penrose.

**6.** Dispositif (1) selon la revendication 4 **caractérisé en ce que** ledit pavage est un pavage en nid d'abeille.

**7.** Dispositif (1) selon l'une des caractéristiques 1 à 6 **caractérisé en ce que** lesdits motifs (8) sont majoritairement constitués de lignes gravées.

**8.** Dispositif (1) selon l'une des revendications 1 à 7 **caractérisé en ce que** lesdits motifs (8) comprennent une pluralité de formes annulaires oblongues (10) orientées radialement par rapport au centre de la coupelle (5).

**9.** Dispositif (1) selon l'une des revendications 1 à 8 **caractérisé en ce que** lesdits motifs (8) comprennent une pluralité de cercles concentriques (11), dont le centre correspond à celui du fond (7) formé par la coupelle (5).

**10.** Dispositif (1) selon l'une des revendications 1 à 9 **caractérisé en ce que** la densité des motifs (8) gravés sur le fond (7) est comprise entre sensiblement 10 % et 60 %.

**11.** Dispositif (1) selon l'une des revendications 1 à 10 **caractérisé en ce que** la profondeur (P) de gravure desdits motifs (8) est comprise entre sensiblement 1,5% et 90% de l'épaisseur de la coupelle (5), de préférence entre 15% et 50% de l'épaisseur de la coupelle (5).

**12.** Dispositif (1) selon l'une des revendications 1 à 11 **caractérisé en ce que** la largeur (L) du trait de gravure est comprise, au niveau du fond du trait, entre sensiblement 0,1 et 3 mm, de préférence entre 0,8 et 1,2 mm.

**13.** Dispositif (1) selon les revendications 10, 11 et 12 **caractérisé en ce que** ladite densité est d'environ 20%, ladite largeur (L) en fond de trait est d'environ 1 mm et la profondeur.(P) de gravure est d'environ 0,2 mm.

**14.** Dispositif (1) selon l'une des revendications 1 à 13 **caractérisé en ce que** lesdits motifs (8) sont répartis de façon sensiblement régulière sur la majeure partie de la surface du fond (7).

**15.** Dispositif (1) selon l'une des revendications 1 à 14 **caractérisé en ce qu'**il constitue un autocuiseur.


**Patentansprüche**

**1.** Vorrichtung (1) zum Kochen von Lebensmitteln, umfassend:

- einen Behälter (2) aus ferritischem oder austenitischem Edelstahl, der dazu bestimmt ist, die Lebensmittel aufzunehmen, und der mit einer unteren Wand (3) versehen ist, die eine Außenseite (3B) aufweist,
- eine Schale (5) aus ferritischem Edelstahl, die auf die Außenseite (3B) aufgesetzt und am Behälter (2) befestigt ist, wobei die Schale (5) einen Boden (7) bildet, mit dem die Kochvorrichtung (1) auf einer Kochplatte aufliegen soll,
- auf den Boden (7) gravierte Motive (8),

wobei die Vorrichtung (1) **dadurch gekennzeichnet ist, dass** die Tiefe (P) der Gravur der Motive (8) und die Dichte dieser letztgenannten auf dem Boden (7) derart gewählt sind, dass der Boden (7) den Anforderungen der Norm EN-12778 von November 2002 entspricht, und dass der Edelstahl des Behälters (2) unabhängig von der ferritischen oder austenitischen Natur ist, was erlaubt, eine Schale (5) zu erhalten, die sowohl mit einem Behälter (2) aus ferritischem Edelstahl als auch mit einem Behälter (2) aus austenitischem Edelstahl verwendbar ist.

**2.** Vorrichtung (1) nach Anspruch 1, **dadurch gekennzeichnet, dass** die Schale (5) an dem Behälter (2) durch Schlagen befestigt ist.

**3.** Vorrichtung (1) nach einem der Ansprüche 1 und 2, **dadurch gekennzeichnet, dass** sie eine Zwischenschicht (6) umfasst, deren Wärmeleitfähigkeit größer als jene des Stahls ist, wobei die Zwischenschicht (6) zwischen der Außenseite (3A) der unteren Wand (3) und der Schale (5) angeordnet ist.

**4.** Vorrichtung (1) nach einem der Ansprüche 1 bis 3, **dadurch gekennzeichnet, dass** die Motive (8) einen Wiederholungscharakter haben, um eine Parkettierung zu bilden.

**5.** Vorrichtung (1) nach Anspruch 4, **dadurch gekennzeichnet, dass** die Parkettierung von der Art Penrose-Parkettierung ist.

**6.** Vorrichtung (1) nach Anspruch 4, **dadurch gekennzeichnet, dass** die Parkettierung eine wabenförmige Parkettierung ist.

**7.** Vorrichtung (1) nach einem der Merkmale 1 bis 6, **dadurch gekennzeichnet, dass** die Motive (8) mehrheitlich von gravierten Linien gebildet sind.

**8.** Vorrichtung (1) nach einem der Ansprüche 1 bis 7, **dadurch gekennzeichnet, dass** die Motive (8) eine Vielzahl von länglichen Ringformen (10) umfassen, die radial zur Mitte der Schale (5) gerichtet sind.

**9.** Vorrichtung (1) nach einem der Ansprüche 1 bis 8, **dadurch gekennzeichnet, dass** die Motive (8) eine Vielzahl von konzentrischen Kreisen (11) umfassen, deren Mitte jener des Bodens (7), der von der Schale (5) gebildet ist, entspricht.

**10.** Vorrichtung (1) nach einem der Ansprüche 1 bis 9, **dadurch gekennzeichnet, dass** die Dichte der auf den Boden (7) gravierten Motive (8) zwischen im Wesentlichen 10 % und 60% beträgt.

**11.** Vorrichtung (1) nach einem der Ansprüche 1 bis 10, **dadurch gekennzeichnet, dass** die Tiefe (P) der Gravur der Motive (8) zwischen im Wesentlichen 1,5 % und 90 % der Dicke der Schale (5), vorzugsweise zwischen 15 % und 50 % der Dicke der Schale (5), beträgt.

**12.** Vorrichtung (1) nach einem der Ansprüche 1 bis 11, **dadurch gekennzeichnet, dass** die Breite (L) der Gravurlinie im Bereich des Bodens der Linie zwischen im Wesentlichen 0,1 und 3 mm, vorzugsweise zwischen 0,8 und 1,2 mm, beträgt.

**13.** Vorrichtung (1) nach den Ansprüchen 10, 11 und 12, **dadurch gekennzeichnet, dass** die Dichte ungefähr 20 %, die Breite (L) am Linienboden ungefähr 1 mm und die Tiefe (P) der Gravur ungefähr 0,2 mm beträgt.

**14.** Vorrichtung (1) nach einem der Ansprüche 1 bis 13, **dadurch gekennzeichnet, dass** die Motive (8) im Wesentlichen regelmäßig auf dem Großteil der Oberfläche des Bodens (7) verteilt sind.

**15.** Vorrichtung (1) nach einem der Ansprüche 1 bis 14, **dadurch gekennzeichnet, dass** sie einen Schnellkochtopf darstellt.

**Claims**

**1.** Food cooking appliance (1) comprising:

- an austenitic or ferritic stainless steel bowl (2) intended to accommodate food and provided with a lower wall (3) having an outer face (3B),
- a ferritic stainless steel cup (5) added on said outer face (3B) and fastened to said bowl (2), said cup (5) forming a bottom (7) by which said cooking appliance (1) is intended to rest on a cooking plate,
- patterns (8) engraved in said bottom (7),

said appliance (1) being **characterized in that** the engraving depth (P) of said patterns (8) and the density thereof on the bottom (7) are chosen so that said bottom (7) meets the requirements of the EN-12778 Standard of November 2002, regardless of whether the stainless steel of the bowl (2) be of ferritic or austenitic nature, allowing to provide a single cup (5) that can be used both with a ferritic stainless steel bowl and an austenitic stainless steel bowl.

**2.** Appliance (1) according to claim 1, **characterized in that** the cup (5) is fastened to the bowl (2) by a stamping process.

**3.** Appliance (1) according to claims 1 and 2, **characterized in that** it comprises an intermediate layer (6), the thermal conductibility of which is higher than that of the steel, said intermediate layer (6) being interposed between the outer face (3A) of the lower wall (3) and the cup (5).

**4.** Appliance (1) according to any one of claims 1 to 3, **characterized in that** said patterns (8) have a repetitive character, so as to form a pavement.

**5.** Appliance (1) according to claim 4, **characterized in that** said pavement is a pavement of the Penrose type.

**6.** Appliance (1) according to claim 4, **characterized in that** said pavement is a honeycomb pavement.

**7.** Appliance (1) according to any one of claims 1 to 6, **characterized in that** said patterns (8) predominantly consist of engraved lines.

**8.** Appliance (1) according to any one of claims 1 to 7, **characterized in that** said patterns (8) comprise a plurality of oblong annular shapes (10) oriented radially with respect to the center of the cup (5).

**9.** Appliance (1) according to any one of claims 1 to 8, **characterized in that** said patterns (8) comprise a plurality of concentric circles (11), the center of which correspond to that of the bottom (7) formed by the cup (5).

**10.** Appliance (1) according to any one of claims 1 to 9, **characterized in that** the density of the patterns (8) engraved in the bottom (7) is comprised between substantially 10 % and 60 %.

**11.** Appliance (1) according to any one of claims 1 to 10, **characterized in that** the engraving depth (P) of said patterns (8) is comprised between substantially 1.5 % and 90 % of the thickness of the cup (5), preferably between 15 % and 50 % of the thickness of the cup (5).

**12.** Appliance (1) according to any one of claims 1 to 11, **characterized in that** the width (L) of the engraving line is comprised, at the line bottom, between substantially 0.1 and 3 mm, and preferably between 0.8 and 1.2 mm.

**13.** Appliance (1) according to claims 10, 11 and 12, **characterized in that** said density is of about 20 %, said width (L) at the line bottom is of about 1 mm, and the engraving depth (P) is of about 0.2 mm.

**14.** Appliance (1) according to any one of claims 1 to 13, **characterized in that** said patterns (8) are substantially regularly distributed over most of the surface of the bottom (7).

**15.** Appliance (1) according to any one of claims 1 to 14, **characterized in that** it is a pressure cooker.

FIG.1

FIG.2

FIG.3

FIG.4

FIG.5

FIG.6

FIG.7

FIG.8

EP 2 138 079 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1053711 A

- EP EN12778 A